# EUROPÄISCHE PATENTSCHRIFT

(11) **EP 3 461 609 B1**
(45) Veröffentlichungstag und Bekanntmachung des Hinweises auf die Patenterteilung: **12.06.2024**
(21) Anmeldenummer: 17194096.8
(22) Anmeldetag: 29.09.2017
(51) Int. Cl.: B27N 3/04, B27N 3/12, D04H 1/425, E04B 1/74, E04B 1/78, E04B 1/80, B27N 1/00, B27N 9/00

(54) **VERFAHREN ZUR HERSTELLUNG VON FASERWERKSTOFFEN**
METHOD FOR THE MANUFACTURE OF FIBROUS MATERIAL
PROCÉDÉ DE FABRICATION DE MATÉRIAUX FIBREUX

(43) Veröffentlichungstag der Anmeldung: 03.04.2019
(73) Patentinhaber: NAPORO Klima Dämmstoff GmbH, A 4320 Perg (AT)
(72) Erfinder: Mückisch, Herbert, 3072 Kasten (AT); Vay, Oliver, 1210 Wien (AT); Frömel-Frybort, Stephan, 1080 Wien (AT); Pinkl, Stefan, 2136 Laa an der Taya (AT); Möseler, Boris, 3474 Kirchberg am Wagram (DE); Hansmann, Christian, 3465 Königsbrunn am Wagram (AT)
(74) Vertreter: Metten, Karl-Heinz

(56) Entgegenhaltungen:
- EP-A1- 2 963 167
- EP-A2- 0 969 156
- WO-A1-01/07219
- WO-A1-2008/107664
- WO-A1-2016/095627
- CA-A1- 2 211 472
- DE-A1- 19 810 862
- US-A- 5 656 129
- US-A1- 2002 162 298

## Beschreibung

Die vorliegende Erfindung betrifft ein Verfahren zur Herstellung von Faserwerkstoffen, insbesondere Dämmstoffmatten oder Dämmstoffplatten.

Die Wärmedämmung von Außenfassaden gewinnt vor dem Hintergrund knapper werdender Ressourcen und steigender Energiekosten zunehmend an Bedeutung. Zu diesem Zweck werden sowohl Dämmplatten auf Basis geschäumter Kunststoffe, beispielsweise sogenannte EPS-Dämmplatten, als auch Dämmplatten auf der Basis von Naturfasern, beispielsweise Hanffaserdämmplatten, eingesetzt. Um aus geeigneten Pflanzenmaterialien Naturfasern für Dämmstoffmatten zu gewinnen, werden diese nicht selten in Nass- oder Trockenverfahren aufgeschlossen und weiterverarbeitet, beispielsweise von Schäben befreit. Bei Schäben handelt es sich um die holzartigen Bestandteile des Pflanzenmaterials. Schäben erschweren den Verarbeitungsprozess von Pflanzenmaterialien zu Dämmstoffmatten regelmäßig nachhaltig. Dieses kann insbesondere auch auf überlange Faser zutreffen. Schäben sowie insbesondere Fasern verfügen über eine hohe Zugfestigkeit und beschädigen daher insbesondere die rotierenden Elemente von Verarbeitungsanlagen. Auch können Schäben zu Verstopfungen der Zuführleitungen der Produktionsanlagen führen. Aus diesem Grunde werden vor der Weiterverwendung der zerkleinerten Pflanzenmaterialien für die Vliesherstellung die Pflanzenschäben regelmäßig vom Fasermaterial abgetrennt.

Ein Verfahren zu Herstellung von Faserplatten, bei dem die gesamte Nutz- bzw. Kulturpflanze verwendet wird, ist aus der DE 875 137 bekannt. Diese sind in einer geeigneten Mahleinrichtung zusammen mit Wasser bis zur Verfilzungsfähigkeit zu zerfasern. Aus dem Faserbrei ist durch Absetzen auf einer durchlässigen Unterlage durch Absaugen oder Abpressen eine Platte zu bilden, die in Folgeschritten weiter verdichtet und mit Imprägnierund Bindemitteln versehen werden kann. Dieses Verfahren ist sehr aufwendig und erfordert kostenintensive Trocknungsschritte.

Gemäß der DE 196 30 828 A1 werden kompostierbare Faservliese, die auch als Dämmstoffe verwendet werden können, dadurch erhalten, dass man als Bindemittel wenigstens ein biologisch abbaubares, im Grundgerüst Ester- und/oder Etherverbindungen enthaltendes Polymer verwendet.

Eine Dämmstoffmatte mit hoher Dämmwirkung soll gemäß der DE 198 46 104 A1 dadurch zugänglich sein, dass die Dämmstoffmatte beidseitig durch Kaschierungen eingefasst ist und zwischen diesen Kaschierungen sogenannte volumengebende Abstandshalter aus im Wesentlichen ungerösteten Hanffaserprodukten vorliegen.

Die WO 2008/107664 A1 beschreibt eine Fasermatte, enthaltend Fasern pflanzlichen Ursprungs, die in einem Fasernetzwerk angeordnet sind, und aus Pflanzen stammendes Material, das sich von den Fasern pflanzlichen Ursprungs unterscheidet und das in dem Fasernetzwerk gehalten wird, sowie optional eine wärmeaktivierbare Bindemittelkomponente, z.B. ausgewählt aus Polypropylen, Polymilchsäure, Polyethylen, Polyester, Vinyl und Polyvinylacetat. Hierbei kann das aus Pflanzen stammende Material ausgewählt sein aus Weizenstroh, Haferstroh, Roggenstroh, Gerstenstroh, Grasstroh, Reisstroh, Bohnenstroh, Rapsstroh, Zellulose, Papier, Pappe und Kokosnussschalen. Ferner können die Fasern pflanzlichen Ursprungs Hanf-, Jute-, Flachs-, Ramie-, Kenaf-, Rattan-, Sojabohnen-, Okra-, Wein-, Torf-, Kapok oder Bananenfaser oder andere ähnliche Arten von Bastfasermaterialien umfassen. Mit den Fasermatten der WO 2008/ 107664 A1 soll sich die für die Verstärkung erforderliche Menge an Bindemittelkomponente verringern lassen.

Aus der EP 2 963 167 A1 geht ein Verfahren zur Herstellung von Faservliesmatten hervor, umfassend die Schritte a) die Zurverfügungstellung von erstem zerkleinerten Pflanzenmaterial enthaltend Pflanzenfasern und Schäben, wobei die Pflanzenfasern und Schäben zumindest in Teilen miteinander verbunden sind, b) Zurverfügungstellung mindestens eines Bindemittels, c) gegebenenfalls Zurverfügungstellung von zweitem zerkleinerten Pflanzenmaterial enthaltend Pflanzenfasern, das einen reduzierten Anteil an Schäben aufweist oder im Wesentlichen frei von Schäben ist, und/oder das sich in einer anderen Eigenschaft als dem Schäbenanteil von dem ersten zerkleinerten Pflanzenmaterial unterscheidet, d) Herstellung einer ersten Materiallage aus dem ersten zerkleinerten Pflanzenmaterial enthaltend Pflanzenfasern und Schäben in einer ersten Zuführvorrichtung, e) gegebenenfalls Herstellung mindestens einer weiteren, zweiten Materiallage aus dem zweiten zerkleinerten Pflanzenmaterial enthaltend Pflanzenfasern, das einen reduzierten Anteil an Schäben aufweist oder im Wesentlichen frei von Schäben ist, und/oder aus einem zweiten zerkleinerten Pflanzenmaterial, das sich in einer anderen Eigenschaft als dem Schäbenanteil von dem ersten zerkleinerten Pflanzenmaterial unterscheidet, in einer weiteren, zweiten Zuführvorrichtung, f) gegebenenfalls Versetzten der ersten und/oder zweiten Materiallage mit mindestens einem Flammschutzmittel, g) gegebenenfalls Vermischen des ersten zerkleinerten Pflanzenmaterials enthaltend Pflanzenfasern und Schäben mit dem mindestens einem Bindemittel und gegebenenfalls mit dem zweiten zerkleinerten Pflanzenmaterial enthaltend Pflanzenfasern, das einen reduzierten Anteil an Schäben aufweist oder im Wesentlichen frei von Schäben ist und/oder das sich in einer anderen Eigenschaft als dem Schäbenanteil von dem ersten zerkleinerten Pflanzenmaterial unterscheidet, h) gegebenenfalls Abscheiden von Staub- und/oder Fremdteilchen aus der erhaltenen Mischung, i) gegebenenfalls Zwischenlagerung der nach Schritt g) bzw. h) erhaltenen Mischung, j) Austragung der Mischung auf ein Förderband unter Ausbildung eines Faserflors, k) gegebenenfalls Behandeln des Faserflors mit mindestens einem Flammschutzmittel, l) Bilden eines Vorvlieses mittels mindestens eines ersten Vliesbildners und/oder mittels mindestens eines Vliesstreuers, m) gegebenenfalls Behandeln des Vorvlieses mit mindestens einem Flammschutzmittel, n) sofern Schritt g) nicht durchgeführt wird, Beaufschlagen des Vorvlieses mit mindestens einem partikulären Bindemittel, bzw. sofern Schritt g) durchgeführt wird, gegebenenfalls Beaufschlagen des Vorvlieses mit mindestens einem partikulären Bindemittel, o) Bilden eines Vlieses aus dem Vorvlies gemäß Schritt l), m) oder n) mittels eines zweiten Vliesbildners, enthaltend einen Tambour, p) gegebenenfalls Behandeln dieses Vlieses mit mindestens einem Flammschutzmittel, q) gegebenenfalls Beaufschlagen des Vlieses mit Wasserdampf, r) gegebenenfalls Aktivieren des Bindemittels und gegebenenfalls gleichzeitiges oder zeitlich versetztes Beaufschlagen des Vlieses mit Druck, s) gegebenenfalls Kalandrieren des gemäß Schritt q) oder r) erhaltenen Vlieses, t) sofern in Schritt q), r) und/oder s) eine Wärmebehandlung stattgefunden hat, Abkühlen des gemäß Schritt q, r) und/oder s) verfestigten Vlieses und gegebenenfalls Beaufschlagen mit Druck und u) Vereinzeln des verfestigten Vlieses zu Faservliesmatten. Mit dem Verfahren der EP 2 963 167 A1 sollen auf zuverlässige Weise Dämmstoffmatten aus nachwachsenden Rohstoffen auch bei Mitverwendung von Schäben erhalten werden können, die sich durch eine homogene Verteilung der die Dämmstoffmatte bildenden Bestandteile, gute Wärmedämmeigenschaften, die vergleichbar sind mit denen geschäumter Kunststoff Dämmplatten, und eine gleichzeitig gute Stabilität bzw. mechanische Festigkeit auszeichnen.

Bei der Fertigung von Dämmplatten aus nachwachsenden Rohstoffen darf nicht unberücksichtigt bleiben, dass diese in Konkurrenz zu geschäumten Dämmplatten aus Kunststoffmaterialien stehen. Letztere verfügen regelmäßig über gute Dämmeigenschaften, welche sich aufgrund der Homogenität des Materials über die gesamte Dämmfläche einstellen. Hingegen kann es mitunter schwierig sein, bei zum Beispiel Dämmplatten aus Hanfpflanzen, welche Schäben enthalten, eine hinreichend homogene Materialverteilung innerhalb der Dämmmatte zu erzielen. Dieser Mangel an einer homogenen Verteilung ist einer hinreichenden Wärmedämmung ebenso abträglich wie einer für die Dämmplatten geforderten Stabilität. Zwar kann die Stabilität einer solchen Dämmplatte durch stärkeres Verfestigen und den Einsatz einer größeren Menge an Bindemitteln erhöht werden, hierdurch verschlechtern sich jedoch regelmäßig die Wärmedämmeigenschaften.

Es wäre folglich wünschenswert, auf ein Verfahren für die Herstellung von Faserwerkstoffen, insbesondere Dämmstoffmatten oder Dämmstoffplatten, aus nachwachsenden Rohstoffen zurückgreifen zu können, das nicht mit den Mängeln des Stands der Technik behaftet ist. Der vorliegenden Erfindung lag daher die Aufgabe zu Grunde, ein Verfahren zur Verfügung zu stellen, mit dem auf zuverlässige Weise Faserwerkstoffe, insbesondere Dämmstoffmatten oder Dämmstoffplatten, erhalten werden können, die sich durch eine homogene Verteilung der den Faserwerkstoff bildenden Bestandteile, gute Wärmedämmeigenschaften, die vergleichbar sind mit denen geschäumter Kunststoffdämmplatten, und eine gleichzeitig gute Stabilität bzw. mechanische Festigkeit auszeichnen.

Demgemäß wurde ein Verfahren zur Herstellung von Faservliesmatten, insbesondere Dämmstoffmatten, gefunden, umfassend
a) die Zurverfügungstellung von Getreidestroh, das zumindest in Teilen vorzerkleinertem, bevorzugt in der Länge verkürztem, gegebenenfalls getrocknetem, Getreidestroh darstellt,
b) Zurverfügungstellung mindestens einer Bindefaser,
c) gegebenenfalls Zurverfügungstellung von in Bezug auf das Getreidestroh einer Mindermenge an mindestens einem, gegebenenfalls getrockneten, zerkleinerten Bastpflanzenmaterial, enthaltend Bastpflanzenfasern und gegebenenfalls Schäben, wobei gegebenenfalls Bastpflanzenfasern und Schäben zumindest in Teilen miteinander verbunden vorliegen
d) Behandeln des Getreidestrohs, gemäß a) mit Wasser und/oder Wärme und/oder Wasserdampf, so dass dieses Getreidestroh in einen Zustand höherer Flexibilität überführt wird,
e) mechanisches und gegebenenfalls chemisches zerkleinerndes Aufbereiten des gemäß Schritt d) erhaltenen Getreidestrohs in mindestens einem Mahlaggregat, insbesondere Refiner, wobei das Mahlaggregat, insbesondere der Refiner, einen Rotor und einen Stator aufweist, wobei der Abstand zwischen Rotor und Stator zwischen 0,0 mm und 5,0 mm liegt, und anschließendes zerkleinerndes Aufbereiten des gemäß Schritt d) erhaltenen Pflanzenmaterials mit dem Dampfexplosionsverfahren,
f) Trocknen des gemäß Schritt e) aufbereiteten Getreidestrohs,
g1) gegebenenfalls Versetzten des Getreidestrohs in Schritt d) und/oder e) und/oder Versetzen desGetreidestrohs gemäß Schritt f) mit mindestens einem Flammschutzmittel und/oder mindestens einem Hydrophobierungsmittel und/oder mindestens einem Biozid, und/oder
g2) gegebenenfalls Versetzten des aufbereiteten Getreidestrohs nach Schritt f) mit der mindestens einen Bindefaser,
h) Herstellung einer ersten Materiallage aus dem aufbereiteten Getreidestroh gemäß Schritt f), g1) und/oder g2) in einer Zuführvorrichtung,
i) Vermischen des aufbereiteten Getreidestrohs gemäß Schritt h) mit der mindestens einen Bindefaser, und gegebenenfalls mit dem zerkleinerten Bastpflanzenmaterial enthaltend Pflanzenfasern und gegebenenfalls Schäben, insbesondere im Luftstrom, sofern nicht bereits das Versetzen mit der mindestens einen Bindefaser gemäß Schritt g2) stattgefunden hat, oder Vermischen des aufbereiteten Getreidestrohs gemäß Schritt h) mit der mindestens einen Bindefaser, und gegebenenfalls mit dem zerkleinerten Bastpflanzenmaterial enthaltend Pflanzenfasern und gegebenenfalls Schäben, insbesondere im Luftstrom, zusätzlich zu dem Versetzen mit der mindestens einen Bindefaser gemäß Schritt g2),
j) gegebenenfalls Zwischenlagerung der nach Schritt h) bzw. i) erhaltenen Mischung,
k) Austragung der Mischung nach i) oder j) auf ein Förderband unter Ausbildung eines Faserflors,
l) gegebenenfalls Behandeln des Faserflors mit mindestens einem Flammschutzmittel und/oder mindestens einem Hydrophobierungsmittel und/oder mindestens einem Biozid, insbesondere Beaufschlagen des Faserflors von der Oberseite und/oder von der Unterseite, insbesondere der Oberseite, mit einem wässrigen System, enthaltend mindestens ein Flammschutzmittel und/oder mindestens ein Hydrophobierungsmittel und/oder mindestens ein Biozid,
m) Bilden eines Vorvlieses oder eines Vlieses mittels mindestens eines ersten Vliesbildners, insbesondere ausgestattet mit Nadeln oder Stiften, beispielsweise aerodynamischen Vliesbildners, insbesondere enthaltend mindestens eine Nadelwalze oder einen Tambour, oder ausgestattet mit mindestens einem Sägezahndraht, und/oder mittels mindestens eines Vliesstreuers, insbesondere umfassend oder bestehend aus mindestens einer Stiftwalze, wobei die in Form eines Faserflors ausgetragene Mischung vorzugsweise mittels einer ersten Transporteinheit, insbesondere enthaltend mindestens ein Walzenpaar aus Oberund Unterwalze oder eine Oberwalze und einen Zuführtisch, insbesondere Muldentisch, dem Vliesbildner oder Vliesstreuer zugeführt wird,
n) gegebenenfalls Behandeln des Vorvlieses oder Vlieses mit mindestens einem Flammschutzmittel und/oder mindestens einem Hydrophobierungsmittel und/oder mindestens einem Biozid, insbesondere Beaufschlagen des Vorvlieses oder Vlieses von der Oberseite und/oder der Unterseite, insbesondere der Oberseite, mit einem wässrigen System, enthaltend mindestens ein Flammschutzmittel und/oder mindestens ein Hydrophobierungsmittel und/oder mindestens ein Biozid,
o) gegebenenfalls Beaufschlagen des Vorvlieses oder Vlieses, insbesondere Bestreuen des Vorvlieses oder Vlieses, mit der mindestens einen Bindefaser,
p) gegebenenfalls Bilden eines Vlieses aus dem Vorvlies gemäß Schritt m), n) oder o) mittels eines zweiten, insbesondere aerodynamischen, Vliesbildners, insbesondere enthaltend einen Tambour, insbesondere ausgestattet mit einem Sägezahndraht und/oder mit Stiftwalzen, wobei das Vorvlies vorzugsweise vermittels einer zweiten Transporteinheit, enthaltend mindestens ein Walzenpaar aus Ober- und Unterwalze oder enthaltend eine Oberwalze und einen Zuführtisch, dem Vliesbildner zugeführt wird,
q) gegebenenfalls Behandeln dieses Vlieses mit mindestens einem Flammschutzmittel und/oder mindestens einem Hydrophobierungsmittel und/oder mindestens einem Biozid, insbesondere Beaufschlagen des Vlieses von der Oberseite und/oder der Unterseite, insbesondere der Oberseite, mit einem wässrigen System, enthaltend mindestens ein Flammschutzmittel und/oder mindestens ein Hydrophobierungsmittel und/oder mindestens ein Biozid,
s) Aktivieren der Bindefasern, umfassend Behandeln des gemäß einem der Schritte m) bis q) erhaltenen Vlieses mit Wärme und/oder gleichzeitiges oder zeitlich versetztes Beaufschlagen des Vlieses mit Druck und/oder Wasserdampf,
t) gegebenenfalls Kalandrieren der gemäß Schritt s) erhaltenen Mischung, insbesondere des gemäß Schritt s) erhaltenen Vlieses,
u) sofern in Schritt s) und/oder t) eine Wärmebehandlung stattgefunden hat, Abkühlen der gemäß Schritt s) und/oder t) verfestigten Mischung, insbesondere des gemäß Schritt s) und/oder t) verfestigten Vlieses, und gegebenenfalls Beaufschlagen mit Druck und
v) Vereinzeln der verfestigten Mischung, insbesondere des verfestigten Vlieses, zu Faserwerkstoffen, insbesondere Dämmstoffmatten oder Dämmstoffplatten,

wobei der Anteil an dem Getreidestroh bei oder oberhalb von 90 Gew.-% liegt
wobei sich der genannte Gewichtsanteil an dem Getreidestroh berechnet auf der Basis des Gesamtgewichts an dem Getreidestroh und an dem zerkleinerten Bastpflanzenmaterial, und
wobei der Anteil an der Bindefaser im Bereich von 10 bis 15 Gew.-% liegt, bezogen auf das Gesamtgewicht des hergestellten Faserwerkstoffs.

Getreidestroh ist mit einer Kutikula ausgestattet. Bei Getreidestroh im Sinne der Erfindung handelt es sich um ausgedroschene trockene Halme und Blätter von Getreide. In einer zweckmäßigen Ausgestaltung wird dieses Getreidestroh zunächst in zu Ballen verpresster Form zur Verfügung gestellt. Bei der Bearbeitung, z.B. dem Ausdreschen von Getreidestroh, und insbesondere überdies auch beim Pressen zu Ballen wird Getreidestroh stets geknickt, zerrissen und/oder geschnitten, d.h. zumindest in Teilen vorzerkleinert. Auch kommen in der Zwischenzeit Ballenpressen zum Einsatz, die über Zerkleinerungswerkzeuge verfügen.

Bei Getreidestroh handelt es sich im Sinne der Erfindung demgemäß um zumindest in Teilen vorzerkleinertes Pflanzenmaterial. Dabei kann das Getreidestroh bevorzugt ausgewählt sein aus der Gruppe bestehend aus Weizenstroh, Gerstenstroh, Roggenstroh, Dinkelstroh, Haferstroh, Reisstroh und beliebigen Mischungen hiervon, insbesondere Weizenstroh.

Bei der Kutikula der Pflanzen handelt es sich regelmäßig um einen wachsartigen Überzug, dessen hydrophobe Eigenschaften Wasserverluste verringern helfen. Die Kutikula ist dabei im Allgemeinen auf Blättern und Stängeln von Pflanzen zu finden. Die Rhizodermis von Pflanzen weist hingegen keine Kutikula auf, um die Wasser- und Nährstoffaufnahme nicht zu behindern. Insbesondere beim Stroh von Getreide führt die Kutikula zu einer sehr glatten und ebenen Fläche, die verhindert, dass diese Bestandteile des Strohs aneinander oder an anderen Gegenständen haften bleiben. Dieses erschwert häufig das Fördern größerer Mengen an Stroh.

Das Behandeln des Getreidestrohs gemäß a) wird in einer Weise durchgeführt, dass dieses Pflanzenmaterial gegenüber seinem Zustand vor diesem Behandlungsschritt in einen Zustand höherer Flexibilität überführt wird. Beispielsweise lassen sich die derart behandelten Pflanzenmaterialien in einem stärkeren Ausmaß biegen, ohne dass ein Knicken bzw. Abknicken oder Brechen eintritt. Diese Behandlung wird vorzugsweise durch Beaufschlagung dieses Pflanzenmaterials mit Wärme und Wasser vorgenommen. Letzteres umfasst insbesondere die Behandlung des Getreidestrohs in einer Nassdampf-, Sattdampfund/oder Heißdampfatmosphäre und/oder das Kochen in einem wässrigen System. Nassdampf bildet sich z.B. regelmäßig durch Sieden des Wassers in einem geschlossenen Behälter in einer dichten Dampfatmosphäre, wobei während der Verdampfung vom Dampf kleine Wassertröpfchen mitgerissen werden und sich ebenfalls in der Dampfatmosphäre befinden. Sobald sich bei diesem Vorgang ein Gleichgewicht zwischen dem Verdampfungsdruck des Wassers und dem Druck des Wasserdampfs einstellt, spricht man von Sattdampf. Erhitzt man einen vom (siedenden) Wasser abgetrennten Sattdampf weiter, erhält man sogenannten Heißdampf. Durch die Überführung des Pflanzenmaterials in einen Zustand höherer Flexibilität kann ein übermäßiges Brechen, insbesondere Verkürzen der Fasern des Pflanzenmaterials minimiert werden. Auch kann mit diesem Behandlungsschritt in einer bevorzugten Ausgestaltung die zumindest teilweise Ablösung der wachsartigen Cuticula der Halme bewerkstelligt werden.

In einer besonders zweckmäßigen Ausgestaltung ist vorgesehen, dass das Getreidestroh im Wesentlichen chemisch und/oder thermisch unbehandelt in Schritt d) zur Verfügung gestellt wird. In einer Ausgestaltung kann das Getreidestroh in Schritt a) in Form eines vorzerkleinerten Pflanzenmaterials im Sinne der Erfindung, wie vorangehend definiert, eingesetzt werden. Alternativ oder zusätzlich kann auch auf weitergehend zerkleinertes Getreidestroh, beispielsweise geschnittenes Getreidestroh, zum Beispiel auf Längen im Bereich von 5 bis 10 cm, zurückgegriffen werden. Nicht weitergehend zerkleinert im Sinne der vorliegenden Erfindung liegt Getreidestroh dann vor, wenn es abgesehen von dem Dreschvorgang und einem etwaigen Verpressvorgang zum Herstellen von Ballen keinem weiteren expliziten Zerkleinerungsschritt unterworfen worden ist.

Nach dem Verfahrensschritt des Trocknens (Schritt f)) verfügt das dabei erhaltene Pflanzenmaterial, insbesondere das Getreidestroh, über eine Restfeuchte im Bereich von 5 bis 25 Gewichtsprozent, vorzugsweise im Bereich von 7 bis 20 Gewichtsprozent und besonders bevorzugt im Bereich von 10 bis 15 Gewichtsprozent.

Für das mechanische und gegebenenfalls chemische zerkleinernde Aufbereiten des gemäß Schritt d) erhaltenen Getreidestrohs in dem Mahlaggregat, insbesondere Refiner, in Schritt e) bedient man sich erfindungsgemäß vorzugsweise einem thermomechanischen (TMP) oder einen chemo-thermomechanischen (CTMP) Prozess, insbesondere Refiner-Prozess. TMP ("thermomechanical pulping")- and CTMP ("chemothermomechanical pulping")-Prozesse sind dem Fachmann aus der Papierherstellung bekannt und werden z.B. bei R. G. Macdonald & J. N. Franklin in "Pulp and Paper Manufacture", 3. Vol., 2. Aufl., Vol. 1: "The Pulping of Wood, 1969; Vol. 2: "Control, Secondary Fiber, Structural Board, Coating", 1969, und Vol. 3: "Papermaking and Paper board Making", 1970, The Joint Textbook Committee of the Paper Industry, und von M. J. Kocurek und C. F. B. Stevens in "Pulp and Paper Manufacture", Vol. 1: "Properties of Fibrous Raw Materials and Their Preparation for Pulping", The Joint Textbook Committee of the Paper Industry, 1983, Seite 182, beschrieben.

Das in diesem Verfahrensschritt e) zum Einsatz kommende Mahlaggregat, insbesondere der Refiner, ist mit einem Rotor und einem Stator ausgestattet, wobei der Abstand zwischen Rotor und Stator zwischen 0,0 mm und 5,0 mm, bevorzugt im Bereich von 0,1 mm bis 3,5 mm und besonders bevorzugt im Bereich von 0,2 mm bis 2,0 mm, liegt.

Für das Zerkleinern des insbesondere vorzerkleinerten Pflanzenmaterials in Schritt e) unter Verwendung von einem Mahlaggregat, insbesondere von einem Refiner, hat es sich als sehr vorteilhaft erwiesen, hieran einen Druckentspannungsschritt, wie dieser z. B. von dem Dampfexplosionsverfahren bekannt ist, anzuschließen. Hierbei kann das Zerkleinern in dem Mahlaggregat bzw. Refiner in der Weise vorgenommen werden, dass das bearbeitete Pflanzenmaterial unter Druck gesetzt wird. Beim Verlassen von Mahlaggregat bzw. Refiner erfährt das zerkleinerte Pflanzenmaterial eine Druckentspannung, was regelmäßig zu einer noch weitergehenden Zerkleinerung beiträgt.

Vor allem durch die Kombination der insbesondere unmittelbar aufeinander folgenden Verfahrensschritte d) und e) gelingt es regelmäßig, die wachsartige Kutikula von dem Pflanzenmaterial abzulösen und folglich von dem Fasermaterial zu entfernen. Auf diese Weise gelangt man zu aufbereiteten Pflanzenmaterialien, die beim Materialtransport ohne weiteres mitgenommen werden und nicht gegeneinander verrutschen und die sich zuverlässig und unproblematisch fördern lassen. Dies führt in den Folgeschritten regelmäßig zu einer homogenen Verteilung der Bestandteile der Pflanzenmaterialien in den erhaltenen Faserwerkstoffen.

In Schritt e) kommt das sogenannte Dampfexplosionsverfahren zum Einsatz. Dieses Verfahren ist auch unter der Bezeichnung Mason-Prozess bekannt. Hierbei handelt es sich um einen explosiven Aufschlussprozess, welcher regelmäßig in einem Autoklaven mittels spontaner Druckentlastung durchgeführt wird. So kann in einer Ausführungsvariante ein Anfangsdruck von zum Beispiel 30 bar gewählt und für einen bestimmten Zeitraum, beispielsweise 15 Sekunden, gehalten werden, worauf durch den Einsatz von Hochdruckdampf eine Druckerhöhung, beispielsweise auf 70 bar, für einen bestimmten Zeitraum herbeigeführt wird. Im Anschluss hieran findet eine spontane Druckentlastung statt. Hierbei kommt es zu einer Zerkleinerung des behandelten Pflanzenmaterials. Indem das Pflanzenmaterial vor der Druckbehandlung regelmäßig in ein wässriges System eingebracht wird, umfasst dieser Prozess im Allgemeinen auch den Schritt d) der Flexibilisierung des Pflanzenmaterials. Es wurde überraschend festgestellt, dass auch bei Einsatz des Dampfexplosionsverfahrens die Kutikula zumindest in Teilen wirksam entfernt wird.

Das erfindungsgemäße Verfahren wird vorzugsweise in der Weise eingestellt, dass das zerkleinerte Getreidestroh nach Schritt e) und/oder f) eine durchschnittliche Länge, insbesondere absolute Länge, im Bereich von 1 mm bis 70 mm und bevorzugt im Bereich von 3 mm bis 50 mm, beispielsweise 10 mm bis 40 mm, aufweist.

Kommt bei dem erfindungsgemäßen Verfahren zerkleinertes Bastpflanzenmaterial zum Einsatz, insbesondere Hanf- und/oder Flachspflanzenmaterial, wird dieses vor dem Zerkleinerungsschritt vorzugsweise einem Rösteprozess, insbesondere einer Feldröste, unterzogen. Dabei weist das zerkleinerte Bastpflanzenmaterial, insbesondere Hanfund/oder Flachspflanzenmaterial, in einer besonders zweckmäßigen Ausgestaltung einen Röstgrad im Bereich von 1 bis 8 auf. Hierbei wird für die Bestimmung des Röstgrads die folgende Skala zugrunde gelegt: 1 = nicht geröstet und 9 = Röste abgeschlossen, mit 1 - 3 = olivgrün bis hellgrün, 4 - 6 = hellblond bis beige mit einsetzender Verpilzung, 7 - 9 = ockerbraun bis dunkelbraun mit zunehmender Verpilzung (gemäß IfPP (Informationen für die Pflanzenproduktion) Heft 7/1998, "Untersuchungen zu pflanzenbaulichen, erntetechnischen und ökonomischen Fragen des Anbaus von Faser- und Körnerhanf", Landesanstalt für Pflanzenbau Forchheim, ISSN 0937 - 6712, 7/ 1998).

In einer weiteren zweckmäßigen Ausgestaltung weist das zerkleinerte Bastpflanzenmaterial, insbesondere Hanf- und/oder Flachspflanzenmaterial, einen Schäbenanteil kleiner 50 Gew.-%, insbesondere kleiner 45 Gew.-%, und besonders bevorzugt kleiner 40 Gew.-%, jeweils bezogen auf das Gesamtgewicht des zerkleinerten Bastpflanzenmaterials, auf. Die durchschnittliche Länge, insbesondere die absolute, Länge der Fasern des zerkleinerten Bastpflanzenmaterials, insbesondere Flachspflanzenmaterials, liegen vorzugsweise im Bereich von 15 mm bis 150 mm, insbesondere im Bereich von 30 mm bis 130 mm und besonders bevorzugt im Bereich von 50 mm bis 90 mm.

In einer besonders zweckmäßigen Ausgestaltung des erfindungsgemäßen Verfahrens ist vorgesehen, dass die Zuführstation ein Wiegemodul, eine Vorrichtung zur Auflockerung des Getreidestrohs aufweist. Durch die Einbindung eines Wiegemoduls lässt sich, vorzugsweise automatisiert, sicherstellen, dass die erhaltenen Faservliesmatten keine signifikanten Dicken-, Festigkeits- und/oder Dichteschwankungen aufweisen. Dies wäre einer einheitlichen, guten Wärmedämmung wie auch einer guten Stabilität abträglich. Dicken-, Festigkeits- und/oder Dichteschwankungen lassen sich auch dadurch nochmals erheblich reduzieren, dass zwischen Vorvlies- und Vliesbildung (Schritte m) und p)) ein Wiegemodul vorgesehen ist zur Bestimmung der Menge an Vorvlies. Indem man das Wiegemodul mit einer Steuereinheit verbindet, kann man die pro Zeiteinheit dem zweiten, insbesondere aerodynamischen, Vliesbildner zuzuführende Materialmenge gezielt einstellen.

Ferner hatte sich für viele Zwecke als besonders bevorzugt erwiesen, für das erfindungsgemäßen Verfahren ebenfalls eine Vorrichtung zur Beaufschlagung des Getreidestrohs mit mindestens einem Flammschutzmittel und/oder mindestens einem Hydrophobierungsmittel und/oder mindestens einem Biozid vorzusehen. Hier haben sich derartige Vorrichtungen als besonders geeignet erwiesen, mit denen sich das Pflanzenmaterial mit einem wässrigen System, enthaltend mindestens ein Flammschutzmittel und/oder mindestens ein Hydrophobierungsmittel und/oder mindestens ein Biozid, besprühen lässt. Demgemäß kann ein hinreichender Flammschutz für die Faserwerkstoffe dadurch erhalten werden, dass man den Faserflor und/oder das Vorvlies und/oder das Vlies mit mindestens einem Flammschutzmittel, insbesondere mit einem wässrigen System, enthaltend mindestens ein Flammschutzmittel, beaufschlagt.

Geeignete Flammschutzmittel können hierbei ausgewählt werden aus der Gruppe bestehend aus stickstoffhaltigen Phosphaten, insbesondere Ammonium-, Melamin- oder Guanidinphosphat, Aluminiumphosphaten, Aluminiumhydroxid, Boraten, insbesondere Ammonium-, Melamin-, Guanidin-, Kalium- oder Natriumboraten, Borsäure, Borphosphorsäureestern, prä-oxidierten Viskosefasern, prä-oxidierten Polyacrylnitril-Fasern, Kohlenstofffasern, Blähgraphit und Reisschalen oder deren beliebige Mischungen. Hierbei lassen sich stickstoffhaltige Phosphate, insbesondere Ammonium-, Melamin- oder Guanidinphosphate, Aluminiumphosphate, Borate, insbesondere Ammonium-, Melamin-, Guanidin-, Kalium- oder Natriumborate, Borsäure oder Borphosphorsäureester oder deren beliebige Mischungen sehr wirksam in Form von wässrigen Systemen, beispielsweise wässrigen Lösungen, in das als Materiallage, Faserflor, Vorvlies oder Vlies vorliegende Material eintragen.

Weiterhin ist es bevorzugt, dass der erste und/oder zweite Vliesbildner eine mit Unterdruck beaufschlagte bzw. beaufschlagbare Siebtrommel zur Abscheidung von Staubteilchen umfasst. Auf diese Weise lässt sich ebenfalls Förderluft absaugen. Das Abscheiden von Staub und gegebenenfalls auch Förderluft tragen zu nochmals verbesserten Eigenschaften der erhaltenen Faserwerkstoffe bei, zum Beispiel in Bezug auf Stabilität und Festigkeit.

Für das zerkleinerte Bastpflanzenmaterial greift man bevorzugt auf solche Materialien zurück, die ausgewählt sind aus der Gruppe bestehend aus Hanf, Jute, Nessel, Flachs, Kenaf, Ramie und Miscanthus oder beliebigen Mischungen hiervon.

Besonders zufriedenstellende Resultate werden auch dadurch erreicht, dass man den Anteil an dem Getreidestroh . , bei oder oberhalb von 90 Gew.-% einstellt. Zusätzlich kann insbesondere auch vorgesehen sein, dass der Anteil an dem zerkleinerten Bastpflanzenmaterial im Bereich von 4 bis 10 Gew.-% liegt. Der Anteil an der Bindefaser liegt im Bereich von 10 bis 15 Gew.-%, bezogen auf das Gesamtgewicht des hergestellten Faserwerkstoffs.

Als Bindemittel greift man bei den erfindungsgemäßen Verfahren auf Bindefasern (auch Bindemittelfasern genannt) zurück. Hierbei können thermoplastische Mono- oder Multikomponentenfasern zum Einsatz kommen, wobei Bikomponentenfasern regelmäßig bevorzugt sind.

Geeignete Bikomponentenfasern können zum Beispiel auf Polyestern, Polyolefinen oder Polylactiden basieren. Bevorzugt für das erfindungsgemäße Herstellungsverfahren sind thermoplastische Bindemittel in Form von Bindemittelfasern. Die Bindefasern basieren regelmäßig auf thermoplastischen Polymeren. Diese Materialien verfügen über eine Erweichungstemperatur, auch Glasübergangstemperatur genannt, oberhalb der sie eine verformbare, schmelzeähnliche Konsistenz annehmen. Demgemäß wird bei der als Thermobonding bekannten Verfestigung der in dem Vorvlies bzw. Vlies vorliegenden Mischung an Pflanzenfasern und Bindemittelfasern eine Verbindung einzelner Fasern oder Faserbündel über das temporär erweichte und anschließend beim Abkühlen erstarrende Bindemittelfasern erreicht.

Als Bindemittelfasern kann ebenfalls auf Phenolharzfasern zurückgegriffen werden.

Geeignete Bindemittelfasern, die für die Verfestigung von Faservliesen geeignet sind, sind dem Fachmann bekannt.

Der Schritt des Aktivierens der Bindefasern, insbesondere Behandeln des gemäß einem der Schritte m) oder p) erhaltenen Vlieses mit Wärme, kann in einer geeigneten Ausführungsvariante auch das Beaufschlagen des Vlieses mit Wasserdampf umfassen. Das Beaufschlagen mit Wasserdampf kann in einer Ausführungsvariante, insbesondere wenn das Beaufschlagen mit Wasserdampf für eine Aktivierung des Bindemittels nicht hinreichend ist, dem Aktivierungsschritt vorgeschaltet werden. Es dient dann vornehmlich zum Konditionieren des Vlieses.

Beim bzw. während des Aktivierens benetzt das Bindemittel das Getreidestroh, was in einem weiteren Prozessschritt, dem Abkühlen, zu einer festen Verbindung führt. Dieses gelingt bei thermoplastischen Bindemittelfasern regelmäßig besonders zweckmäßig durch Behandlung mit Wärme. Hierbei wird das reversible Erweichungsverhalten der thermoplastischen Materialien ausgenutzt. Dieses Vorgehen wird mitunter auch als Thermoboding bezeichnet.

Das erfindungsgemäße Verfahren löst die der Erfindung zu Grunde liegende Aufgabe auch dann besonders zufriedenstellend, wenn das Bastpflanzenmaterial enthaltend Pflanzenfasern und gegebenenfalls Schäben hauptsächlich Pflanzenfasern und/oder Schäben mit einer durchschnittlichen Länge, insbesondere absoluten Länge, im Bereich von 2 bis 15 cm, insbesondere im Bereich von 3 bis 12 cm und besonders bevorzugt im Bereich von 4 bis 10 cm, aufweist. Besonders geeignete Längen an zerkleinerten Bastpflanzenmaterialien, insbesondere Fasern/oder Schäben, vorzugsweise Fasern und Schäben, kann man auch dadurch erhalten, dass die Breite der Schneidscheiben der Rotorschere oder des Rotorreißers im Bereich von 4 cm bis 15 cm, vorzugsweise im Bereich von 5 bis 12 cm und besonders bevorzugt im Bereich von 7 bis 10 cm liegt und/oder dass der Durchmesser der Schneidscheiben im Bereich von 300 mm bis 900 mm, vorzugsweise im Bereich von 400 mm bis 800 mm und besonders bevorzugt im Bereich von 600 mm bis 700 mm liegt. Die Rotorschere oder der Rotorreißer weisen regelmäßig zwei, insbesondere gegenläufig arbeitende, Schneidwellen auf. Geeignete Rotorscheren bzw. Rotorreißer sind dem Fachmann z.B. aus der WO2013/ 167497 bekannt.

Die Einstellung der gewünschten Länge an Bastpflanzenfasern und Schäben gelingt gemäß einer besonders zweckmäßigen Ausführungsform auch dann besonders zuverlässig, wenn man einen Guillotinenschneider einsetzt, der ein im Wesentlichen quer zur Förderrichtung des Stroms an Bastpflanzenmaterial, insbesondere linear, bewegbares oder bewegtes Schneidmesser umfasst. Auf diese Weise gelingt es besonders gut, die Bastpflanzenfasern und Schäben auf eine vorbestimmte durchschnittliche Länge zu bringen, ohne eine besonders große Streubreite der erhaltenen Längen in Kauf nehmen zu müssen.

Zu einer besonders homogenen Verteilung der Komponenten innerhalb der nach dem erfindungsgemäßen Verfahren erhaltenen Faserwerkstoffe sowie zu einem besonders anlagenschonenden und komplikationsfreien Verfahrensablauf gelangt man insbesondere auch dadurch, dass die dem zerkleinerten Bastpflanzenmaterial enthaltend Pflanzenfasern und gegebenenfalls Schäben zugrundeliegenden Pflanzenstängel vor der Zerkleinerung eine durchschnittliche Dicke, vorzugsweise maximale Dicke, bis 5 cm, vorzugsweise bis 4,5 cm und besonders bevorzugt im Bereich von 0,2 cm bis 3,5 cm aufweisen.

Für das erfindungsgemäße Verfahren greift man bevorzugt auf solche zerkleinerte Bastpflanzenmaterialien zurück mit einem Faseranteil im Bereich von 10 bis 90 Gew.-%, insbesondere im Bereich von 20 bis 60 Gew.-% und besonders bevorzugt im Bereich von 40 bis 60 Gew.-%, und/oder einem Schäbenanteil im Bereich von 10 bis 60 Gew.-%, insbesondere im Bereich von 20 bis 60 Gew.-% und besonders bevorzugt im Bereich von 20 bis 45 Gew.-%.

In dem erfindungsgemäßen Verfahren wird für als Pflanzenmaterial, das mit einer Kutikula ausgestattet ist, auf Getreidestroh zurückgegriffen. Bei Getreidestroh handelt es sich im Sinne der vorliegenden Erfindung um ein zumindest in Teilen vorzerkleinertes Pflanzenmaterial. Ferner kommen bei dem erfindungsgemäßen Verfahren Bindefasern als Bindemittel zum Einsatz. Auch ist bevorzugt, dass in Verfahrensschritt d) die Behandlung des Pflanzenmaterials mit Wärme und Wasser geschieht. Eine weitere Variante des erfindungsgemäßen Verfahrens zeichnet sich dadurch aus, dass das Pflanzenmaterial in einem Refiner zerkleinert wird. Auch wird bevorzugt auf solche Verfahrensvarianten zugegriffen, bei denen zerkleinertes Bastpflanzenmaterial zum Einsatz kommt, bei dem die Bastpflanzenfasern und Schäben zunächst in Teilen miteinander verbunden vorliegen.

Ferner werden Faserwerkstoffe, insbesondere Dämmstoffmatten oder Dämmstoffplatten, offenbart, erhältlich gemäß dem erfindungsgemäßen Verfahren. Geeignete Faserwerkstoffe zeichnen sich durch eine Dichte im Bereich größer oder gleich 15 kg/m³, vorzugsweise größer oder gleich 40 kg/m³ und besonders bevorzugt im Bereich von 20 bis 600 kg/m³, aus. Besonders bevorzugte Faserwerkstoffe, insbesondere Dämmstoffmatten oder Dämmstoffplatten, enthalten mindestens eine Nut und/oder mindestens eine Feder oder korrespondierende Fügekomponenten, um benachbarte Faserwerkstoffe wie Dämmstoffmatten oder Dämmstoffplatten bündig miteinander zu kombinieren.

Die Faserwerkstoffe zeichnen sich insbesondere dadurch aus, dass diese in einer Ausgestaltung im Wesentlichen keine Bastpflanzenfasern oder keine Bastpflanzenschäben, insbesondere keine Bastpflanzenfasern und keine Bastpflanzenschäben, enthalten.

Besonders gute Resultate hinsichtlich Verarbeitbarkeit und Festigkeit bei gleichzeitig niedrigen Bindemittelanteilen werden erhalten mit Faserwerksstoffen, bei denen das vorzerkleinerte Getreidestroh eine durchschnittliche Länge, insbesondere absolute Länge, im Bereich von 0,1 cm bis 25 cm, bevorzugt im Bereich von 0,3 cm bis 15 cm und besonders bevorzugt im Bereich von 0,5 cm bis 12 cm, beispielsweise im Bereich von 5 cm bis 12 cm, aufweist. Sofern zugegen, verfügt das zerkleinerte Bastpflanzenmaterial, insbesondere das zerkleinerte Hanf- und/oder Flachspflanzenmaterial, über eine durchschnittliche Länge, insbesondere absoluten Länge, im Bereich von 0,5 cm bis 15 cm, bevorzugt im Bereich von 1 cm bis 12 cm und besonders bevorzugt im Bereich von 2 cm bis 10 cm. Der Anteil an dem an dem Getreidestroh liegt dabei bevorzugt bei oder oberhalb von 70 Gew.-%, vorzugsweise bei oder oberhalb von 80 Gew.-% und besonders bevorzugt bei oder oberhalb von 90 Gew.-%, wobei sich der genannte Gewichtsanteil an dem Getreidestroh berechnet auf der Basis des Gesamtgewichts an dem Getreidestroh und an dem zerkleinerten Hanf- und/oder Flachspflanzenmaterial, und bei denen der Anteil an dem zerkleinerten Hanf- und/oder Flachspflanzenmaterial im Bereich von 2 bis 20 Gew.-% und bevorzugt im Bereich von 4 bis 10 Gew.-% liegt, wobei sich der genannte Gewichtsanteil an dem an dem zerkleinerten Hanfund/oder Flachspflanzenmaterial berechnet auf der Basis des Gesamtgewichts an dem Getreidestroh und an dem zerkleinerten Hanf- und/oder Flachspflanzenmaterial, und bei denen der Anteil an der Bindefaser im Bereich von 5 bis 20 Gew.-% und bevorzugt im Bereich von 10 bis 15 Gew.-% liegt, bezogen auf das Gesamtgewicht des hergestellten Faserwerkstoffs, wobei die Anteile der den Faserwerkstoff bildenden Komponenten sich stets zu 100 Gew.-% addieren, wobei das Getreidestroh über eine Restfeuchte im Bereich von 7 bis 20 Gewichtsprozent und bevorzugt im Bereich von 10 bis 15 Gewichtsprozent verfügt.

In einer besonders zweckmäßigen Ausführungsvariante liegen die Faserwerkstoffe in Form von MDF-Platten, Gebäudeinnendämmmatten oder als Möbelbestandteile vor.

Die Faserwerkstoffe, insbesondere in Form von Dämmmatten oder Dämmplatten, können vorzugsweise für die Geräusch- und/oder Wärmedämmung eingesetzt werden.

Der vorliegenden Erfindung liegt die überraschende Erkenntnis zu Grunde, dass sich mit dem erfindungsgemäßen Verfahren zuverlässig Faserwerkstoffe, insbesondere Dämmstoffmatten oder Dämmstoffplatten, herstellen lassen, die sich durch eine sehr homogene Verteilung der den Faserwerkstoff bildenden Bestandteile auszeichnen. Eine weitere, überraschende Erkenntnis ist, dass das Anbinden der Bindefasern an das zerkleinerte Getreidestroh in bevorzugter Weise funktioniert, wenn das Getreidestroh dem beschriebenen Zerkleinerungsverfahren der vorliegenden Erfindung unterworfen wurde. Hiermit einher gehen überraschenderweise verbesserte mechanische Eigenschaften der mit dem erfindungsgemäßen Verfahren erhaltenen Faserwerkstoffe. Besonders vorteilhaft ist auch, dass sich derartige Effekte mit geringem Anteil an Bindemittelfasern einstellen. Hierdurch wird eine sehr gute und gleichmäßige Dämmung, und zwar sowohl Wärmedämmung wie auch Schalldämmung, herbeigeführt. Demgemäß sind auch die Dichteunterschiede innerhalb der nach dem erfindungsgemäßen Verfahren erhältlichen Faserwerkstoffe vernachlässigbar bzw. nicht existent. Auch lassen sich gute Wärmedämmeigenschaften, die vergleichbar sind mit denen geschäumter Kunststoffdämmplatten, erzielen. Als besonders vorteilhaft bei der Verarbeitung der verwendeten Pflanzenmaterialien, die mit einer Kutikula ausgestattet sind, hat sich auch herausgestellt, dass die zerkleinerten Pflanzenbestandteile nicht mehr gegeneinander verrutschen, wodurch ein unproblematischer, kontrollierbarer Materialtransport gelingt. Mit dem erfindungsgemäßen Verfahren lässt sich überdies das Anbindeverhalten der Bindemittelfaser an das zerkleinerte Getreidestroh nochmals verbessern. Hiermit geht regelmäßig eine Optimierung der mechanischen Eigenschaften einher. Ebenso lässt sich die Menge an Bindemittel verringern. Die nach dem erfindungsgemäßen Verfahren erhaltenen Faserwerkstoffe, basierend auf Getreidestroh, zeichnen sich demgemäß durch eine gute Stabilität bzw. mechanische Festigkeit aus. Außerdem gestattet das erfindungsgemäße Verfahren die variable Eintragung von sowohl Bindemittel wie auch Flammschutzmittel an verschiedenen Stellen des Verfahrensverlaufs. Hierdurch können Produkte für ganz bestimmte Anwendungen gezielt und zuverlässig hergestellt werden. Schließlich können mit dem erfindungsgemäßen Verfahren Faserwerkstoffe mit stark unterschiedlichen Dichten erhalten werden. Demgemäß gestattet das erfindungsgemäße Verfahren sowohl die Herstellung von Faserwerkstoffen für die Gefachdämmung als auch für die Fassadendämmung auf ein und derselben Anlage. Von Vorteil ist auch, dass sich mit dem erfindungsgemäßen Verfahren voluminöse Dämmstoffe mit günstigen Wärmedämmeigenschaften auf kostengünstige Weise erhalten lassen. Der Zugang zu Dämmmaterialien mit geringer Dichte, die mit einem sehr zufriedenstellenden Eigenschaftsprofil ausgestattet sind, hilft ebenfalls, den Materialeinsatz zu verringern. Ein weiterer überraschender Vorteil des erfindungsgemäßen Verfahrens zeigt sich darin, dass sich Getreidestroh, also ein Pflanzenmaterialien, das mit einer Kutikula ausgestattet ist, ohne weiteres auf herkömmlichen Verarbeitungsmaschinen transportieren lassen. Ein ungleichmäßiger Materialtransport kann damit ausgeschlossen werden. Schließlich ist auch von Vorteil, dass die Faserwerkstoffe, insbesondere Dämmstoffmatten oder Dämmstoffplatten, vorzugsweise wenn ausschließlich aus dem zerkleinerten Getreidestroh gebildet, sich ohne weiteres, das heißt in der Regel mit herkömmlichen Werkzeugen, mechanisch bearbeiten, beispielsweise fräsen lassen. Auf diese Weise können Faserwerkstoffe, insbesondere Dämmstoffmatten oder Dämmstoffplatten, z.B. mit Nuten und/oder Federn ausgestattet werden.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Verfahren zur Herstellung von Faserwerkstoffen, insbesondere Dämmstoffmatten oder Dämmstoffplatten, umfassend
a) die Zurverfügungstellung von Getreidestroh, das zumindest in Teilen vorzerkleinertes, insbesondere in der Länge verkürztes, Getreidestroh darstellt,
b) Zurverfügungstellung mindestens einer Bindefaser,
c) gegebenenfalls Zurverfügungstellung von in Bezug auf das Getreidestroh einer Mindermenge an mindestens einem zerkleinerten Bastpflanzenmaterial, enthaltend Bastpflanzenfasern und gegebenenfalls Schäben,
d) Behandeln des Getreidestrohs gemäß a) mit Wärme und/oder Wasser und/oder Wasserdampf, so dass dieses Getreidestroh in einen Zustand höherer Flexibilität überführt wird,
e) mechanisches und gegebenenfalls chemisches zerkleinerndes Aufbereiten des gemäß Schritt d) erhaltenen Getreidestrohs in mindestens einem Mahlaggregat, insbesondere Refiner, wobei das Mahlaggregat, insbesondere der Refiner, einen Rotor und einen Stator aufweist, wobei der Abstand zwischen Rotor und Stator zwischen 0,0 mm und 5,0 mm liegt, und anschließendes zerkleinerndes Aufbereiten des gemäß Schritt d) erhaltenen Pflanzenmaterials mittels Dampfexplosion,
f) Trocknen des gemäß Schritt e) aufbereiteten Getreidestrohs,
wobei das Getreidestroh nach Schritt f) über eine Restfeuchte im Bereich von 7 bis 15 Gewichtsprozent verfügt,
g1) gegebenenfalls Versetzten des Getreidestrohs in Schritt d) und/oder e) und/oder Versetzen des Getreidestrohs gemäß Schritt f) mit mindestens einem Flammschutzmittel und/oder mindestens einem Hydrophobierungsmittel und/oder mindestens einem Biozid, und/oder
g2) gegebenenfalls Versetzten des aufbereiteten Getreidestrohs nach Schritt f) mit der mindestens einen Bindefaser,
h) Herstellung einer ersten Materiallage aus dem aufbereiteten Getreidestroh gemäß Schritt f), g1) und/oder g2) in einer Zuführvorrichtung,
i) Vermischen des aufbereiteten Getreidestrohs gemäß Schritt h) mit der mindestens einen Bindefaser und gegebenenfalls mit dem zerkleinerten Bastpflanzenmaterial enthaltend Pflanzenfasern und gegebenenfalls Schäben, sofern nicht bereits das Versetzen mit der mindestens einen Bindefaser gemäß Schritt g2) stattgefunden hat, oder Vermischen des aufbereiteten Getreidestrohs gemäß h) mit der mindestens einen Bindefaser und gegebenenfalls mit dem zerkleinerten Bastpflanzenmaterial enthaltend Pflanzenfasern und gegebenenfalls Schäben zusätzlich zu dem Versetzen mit der mindestens einen Bindefaser gemäß Schritt g2),
j) gegebenenfalls Zwischenlagerung der nach Schritt h) bzw. i) erhaltenen Mischung,
k) Austragung der Mischung nach i) oder j) auf ein Förderband unter Ausbildung eines Faserflors,
l) gegebenenfalls Behandeln des Faserflors mit mindestens einem Flammschutzmittel und/oder mindestens einem Hydrophobierungsmittel und/oder mindestens einem Biozid, insbesondere Beaufschlagen des Faserflors von der Oberseite und/oder von der Unterseite, insbesondere der Oberseite, mit einem wässrigen System, enthaltend mindestens ein Flammschutzmittel und/oder mindestens ein Hydrophobierungsmittel und/oder mindestens ein Biozid,
m) Bilden eines Vorvlieses oder eines Vlieses mittels mindestens eines ersten Vliesbildners, insbesondere ausgestattet mit Nadeln oder Stiften oder ausgestattet mit mindestens einem Sägezahndraht, und/oder mittels mindestens eines Vliesstreuers, insbesondere umfassend oder bestehend aus mindestens einer Stiftwalze,
n) gegebenenfalls Behandeln des Vorvlieses oder Vlieses mit mindestens einem Flammschutzmittel und/oder mindestens einem Hydrophobierungsmittel und/oder mindestens einem Biozid, insbesondere Beaufschlagen des Vorvlieses oder Vlieses von der Oberseite und/oder der Unterseite, insbesondere der Oberseite, mit einem wässrigen System, enthaltend mindestens ein Flammschutzmittel und/oder mindestens ein Hydrophobierungsmittel und/oder mindestens ein Biozid,
o) gegebenenfalls Beaufschlagen des Vorvlieses oder Vlieses, insbesondere Bestreuen des Vorvlieses oder Vlieses, mit der mindestens einen Bindefaser,
p) gegebenenfalls Bilden eines Vlieses aus dem Vorvlies gemäß Schritt m), n) oder o) mittels eines zweiten, insbesondere aerodynamischen, Vliesbildners, insbesondere enthaltend einen Tambour, insbesondere ausgestattet mit einem Sägezahndraht und/oder mit Stiftwalzen, wobei das Vorvlies vorzugsweise vermittels einer zweiten Transporteinheit, enthaltend mindestens ein Walzenpaar aus Ober- und Unterwalze oder enthaltend eine Oberwalze und einen Zuführtisch, dem Vliesbildner zugeführt wird,
q) gegebenenfalls Behandeln dieses Vlieses mit mindestens einem Flammschutzmittel und/oder mindestens einem Hydrophobierungsmittel und/oder mindestens einem Biozid, insbesondere Beaufschlagen des Vlieses von der Oberseite und/oder der Unterseite, insbesondere der Oberseite, mit einem wässrigen System, enthaltend mindestens ein Flammschutzmittel und/oder mindestens ein Hydrophobierungsmittel und/oder mindestens ein Biozid
s) Aktivieren der Bindefaser, umfassend das Behandeln des gemäß einem der Schritte m) bis q) erhaltenen Vlieses mit Wärme und/oder gleichzeitiges oder zeitlich versetztes Beaufschlagen des Vlieses mit Druck und/oder Wasserdampf,
t) gegebenenfalls Kalandrieren der gemäß Schritt s) erhaltenen Mischung,
u) sofern in Schritt s) und/oder t) eine Wärmebehandlung stattgefunden hat, Abkühlen der gemäß Schritt s) und/oder t) verfestigten Mischung und gegebenenfalls Beaufschlagen mit Druck und
v) Vereinzeln der verfestigten Mischung zu Faserwerkstoffen, insbesondere Dämmstoffmatten oder Dämmstoffplatten,
wobei der Anteil an dem Getreidestroh bei oder oberhalb von 90 Gew.-% liegt, wobei sich der genannte Gewichtsanteil an dem Getreidestroh berechnet auf der Basis des Gesamtgewichts an dem Getreidestroh und an dem zerkleinerten Bastpflanzenmaterial, und
wobei der Anteil an der Bindefaser im Bereich von 10 bis 15 Gew.-% liegt, bezogen auf das Gesamtgewicht des hergestellten Faserwerkstoffs.

2. Verfahren nach Anspruch 1, **dadurch gekennzeichnet, dass**
das Getreidestroh in a) getrocknetes Getreidestroh darstellt,
das zerkleinerte Bastpflanzenmaterial getrocknetes Bastpflanzenmaterial darstellt, die Bastpflanzenfasern und Schäben in c) zumindest in Teilen miteinander verbunden vorliegen,
das aufbereitete Getreidestroh gemäß Schritt f), g1) und/oder h) in i) im Luftstrom mit der mindestens einen Bindefaser und gegebenenfalls mit dem zerkleinerten Bastpflanzenmaterial enthaltend Pflanzenfasern und gegebenenfalls Schäben vermischt wird,
der mindestens eine erste Vliesbildner ein aerodynamischer Vliesbildner ist, insbesondere enthaltend mindestens eine Nadelwalze oder einen Tambour, und/oder
wobei die in Form eines Faserflors ausgetragene Mischung mittels einer ersten Transporteinheit dem Vliesbildner oder Vliesstreuer zugeführt wird.

3. Verfahren nach Anspruch 2, **dadurch gekennzeichnet, dass**
die erste Transporteinheit mindestens ein Walzenpaar aus Ober- und Unterwalze oder eine Oberwalze und einen Zuführtisch, insbesondere Muldentisch, enthält.

4. Verfahren nach einem der vorangehenden Ansprüche, **dadurch gekennzeichnet, dass**
das Getreidestroh nach Schritt f) über eine Restfeuchte im Bereich von 10 bis 15 Gewichtsprozent verfügt.

5. Verfahren nach einem der vorangehenden Ansprüche, **dadurch gekennzeichnet, dass**
das Mahlaggregat, insbesondere der Refiner, einen Rotor und einen Stator aufweist, wobei der Abstand zwischen Rotor und Stator in Schritt e) im Bereich von 0,05 mm bis 3,5 mm und bevorzugt im Bereich von 0,1 mm bis 2,0 mm liegt.

6. Verfahren nach einem der vorangehenden Ansprüche, **dadurch gekennzeichnet, dass**
das vorzerkleinerte Getreidestroh eine durchschnittliche oder absolute Länge im Bereich von 0,1 cm bis 25 cm, bevorzugt im Bereich von 0,3 cm bis 15 cm und besonders bevorzugt im Bereich von 0,5 cm bis 12 cm, aufweist und/oder dass das zerkleinerte Getreidestroh nach Schritt f) eine durchschnittliche oder absolute Länge im Bereich von 1 mm bis 70 mm und besonders bevorzugt im Bereich von 3 mm bis 50 mm, aufweist.

7. Verfahren nach einem der vorangehenden Ansprüche, **dadurch gekennzeichnet, dass**
in Schritt s) das Aktivieren der Bindefasern das Behandeln des gemäß mindestens einem der Schritte n) bis q) erhaltenen Vlieses mit Wärme und/oder gleichzeitiges oder zeitlich versetztes Beaufschlagen des Vlies mit Druck und/oder Wasserdampf umfasst.

8. Verfahren nach einem der vorangehenden Ansprüche, **dadurch gekennzeichnet, dass**
der Anteil an dem zerkleinerten Bastpflanzenmaterial im Bereich von 4 bis 10 Gew.-% liegt, bezogen auf das Gesamtgewicht des hergestellten Faserwerkstoffs.

9. Verfahren nach einem der vorangehenden Ansprüche, **dadurch gekennzeichnet, dass**
die Bindefasern thermoplastische Mono- oder Multikomponentenfasern darstellen, insbesondere Bikomponentenfasern.

## Claims

1. Method for the production of fibrous materials, in particular insulating mats or insulating boards, comprising
a) the provision of cereal straw which is at least partly pre-comminuted, in particular shortened in length, cereal straw,
b) the provision of at least one binder fiber,
c) optionally provision of in relation to the cereal straw a minor amount of at least one comminuted bast plant material, containing bast plant fibers and optionally shives,
d) treatment of the cereal straw according to a) with heat and/or water and/or water steam, so that this cereal straw is converted into a state of higher flexibility,
e) mechanical and optionally chemical comminuting conditioning of the cereal straw obtained according to step d) in at least one grinding unit, in particular refiner, wherein the grinding unit, in particular the refiner, has a rotor and a stator, wherein the distance between rotor and stator is between 0.0 mm and 5.0 mm, and subsequent comminuting conditioning of the plant material obtained according to step d) by means of steam explosion,
f) drying of the cereal straw conditioned according to step e),
wherein the cereal straw after step f) has a residual moisture content in the range from 7 to 15 percent by weight,
g1) optionally admixing the cereal straw in step d) and/or e) and/or admixing the cereal straw according to step f) with at least one flame retardant and/or at least one hydrophobing agent and/or at least one biocide, and/or
g2) optionally admixing the conditioned cereal straw after step f) with the at least one binding fiber,
h) production of a first material layer from the conditioned cereal straw according to step f), g1) and/or g2) in a feeding device,
i) mixing of the conditioned cereal straw according to step h) with the at least one binding fiber and optionally with the comminuted bast plant material containing plant fibers and optionally shives, unless the admixing with the at least one binder fiber according to step g2) has already taken place, or
mixing of the conditioned cereal straw according to h) with the at least one binding fiber and optionally with the comminuted bast plant material containing plant fibers and optionally shives in addition to the admixing with the at least one binding fiber according to step g2),
j) optionally intermediate storage of the mixture obtained according to step h) or i),
k) discharge of the mixture according to i) or j) onto a conveyor belt to form a fibrous pile,
l) optionally treatment of the fibrous pile with at least one flame retardant and/or at least one hydrophobing agent and/or at least one biocide, in particular application of an aqueous system containing at least one flame retardant and/or at least one hydrophobing agent and/or at least one biocide to the fibrous pile from the upper side and/or from the lower side, in particular the upper side,
m) formation of a pre-non-woven or a non-woven by means of at least one first non-woven former, in particular equipped with needles or pins or equipped with at least one sawtooth wire, and/or by means of at least one non-woven spreader, in particular comprising or consisting of at least one pin roller,
n) optionally treatment of the pre-non-woven or non-woven with at least one flame retardant and/or at least one hydrophobing agent and/or at least one biocide, in particular application of an aqueous system containing at least one flame retardant and/or at least one hydrophobing agent and/or at least one biocide to the pre-non-woven or non-woven from the upper side and/or from the lower side, in particular the upper side,
o) optionally application of the at least one binding fiber to the pre-non-woven or non-woven, in particular sprinkling of the pre-non-woven or non-woven with the at least one binding fiber,
p) optionally formation of a non-woven from the pre-non-woven according to step m), n), or o) by means of a second, in particular aerodynamic, non-woven former, in particular containing a tambour, in particular equipped with a sawtooth wire and/or with pin rollers, wherein the pre-non-woven is preferably fed to the non-woven former by means of a second transport unit, containing at least one roller pair of upper and lower roller or containing an upper roller and a feeding table,
q) optionally treatment of this non-woven with at least one flame retardant and/or at least one hydrophobing agent and/or at least one biocide, in particular application of an aqueous system containing at least one flame retardant and/or at least one hydrophobing agent and/or at least one biocide to the non-woven from the upper side and/or from the lower side, in particular the upper side,
s) activation of the binding fiber, comprising the treatment of the non-woven obtained according to one of steps m) to q) with heat and/or simultaneous or staggered in time application of pressure and/or water steam to the non-woven,
t) optionally calendering of the mixture obtained according to step s),
u) if a heat treatment has taken place in step s) and/or t), cooling of the mixture solidified according to step s) and/or t) and optionally application of pressure and
v) separating of the solidified mixture into fibrous materials, in particular insulating mats or insulating boards,
wherein the proportion of the cereal straw is at or above 90 wt-%, wherein the mentioned weight proportion of the cereal straw is calculated on the basis of the total weight of the cereal straw and of the comminuted bast plant material, and
wherein the proportion of the binding fiber is in the range from 10 to 15 wt-%, based on the total weight of the fibrous material produced.

2. Method according to claim 1, **characterized in that**
the cereal straw in a) is dried cereal straw,
the comminuted bast plant material is dried bast plant material,
the bast plant fibers and shives in c) are at least partly connected to one another,
the conditioned cereal straw according to step f), g1) and/or h) in i) is mixed in the air stream with the at least one binding fiber and optionally with the comminuted bast plant material containing plant fibers and optionally shives,
the at least one first non-woven former is an aerodynamic non-woven former, in particular containing at least one needle roller or a tambour, and/or
wherein the mixture discharged in the form of a fibrous pile is fed to the non-woven former or non-woven sprinkler by means of a first transport unit.

3. Method according to claim 2, **characterized in that**
the first transport unit contains at least one roller pair of upper and lower roller or an upper roller and a feeding table, in particular trough table.

4. Method according to any one of the preceding claims, **characterized in that**
the cereal straw after step f) has a residual moisture content in the range from 10 to 15 percent by weight.

5. Method according to any one of the preceding claims, **characterized in that**
the grinding unit, in particular the refiner, has a rotor and a stator, wherein the distance between rotor and stator in step e) is in the range from 0.05 mm to 3.5 mm and preferably in the range from 0.1 mm to 2.0 mm.

6. Method according to any one of the preceding claims, **characterized in that**
the pre-comminuted cereal straw has an average or absolute length in the range from 0.1 cm to 25 cm, preferably in the range from 0.3 cm to 15 cm and particularly preferably in the range from 0.5 cm to 12 cm, and/or **in that** the comminuted cereal straw after step f) has an average or absolute length in the range from 1 mm to 70 mm and particularly preferably in the range from 3 mm to 50 mm.

7. Method according to any one of the preceding claims, **characterized in that**
in step s) the activation of the binding fibers comprises the treatment of the non-woven obtained according to at least one of steps n) to q) with heat and/or simultaneous or staggered in time application of pressure and/or water steam to the non-woven.

8. Method according to any one of the preceding claims, **characterized in that**
the proportion of the comminuted bast plant material is in the range from 4 to 10 wt-%, based on the total weight of the fibrous material produced.

9. Method according to any one of the preceding claims, **characterized in that**
the binding fibers are thermoplastic mono- or multicomponent fibers, in particular bicomponent fibers.

## Revendications

1. Procédé de fabrication de matériaux fibreux, en particulier de mats isolants ou de panneaux isolants, comprenant
a) la mise à disposition de paille de céréale, qui est de la paille de céréale au moins partiellement pré-broyée, en particulier raccourcie en longueur,
b) la mise à disposition d'au moins une fibre de liaison,
c) le cas échéant la mise à disposition, par rapport à la paille de céréale, d'une quantité mineure d'au moins un matériau de plante de liber broyé, contenant des fibres de plante de liber et le cas échéant des chènevottes,
d) le traitement de la paille de céréale selon a) avec de la chaleur et/ou de l'eau et/ou de la vapeur d'eau, de sorte que cette paille de céréale soit transférée dans un état de plus grande flexibilité,
e) le conditionnement par broyage mécanique et le cas échéant chimique de la paille de céréale obtenue selon l'étape d) dans au moins un agrégat de mouture, en particulier un raffineur, le agrégat de mouture, en particulier le raffineur, présentant un rotor et un stator, la distance entre le rotor et le stator étant est entre 0,0 mm et 5,0 mm, et le conditionnement par broyage subséquent du matériau de plante obtenu selon l'étape d) au moyen d'une explosion de vapeur,
f) le séchage de la paille de céréale conditionnée selon l'étape e),
la paille de céréale présentant après l'étape f) une humidité résiduelle dans la plage de 7 à 15 % en poids,
g1) le cas échéant le mélange de la paille de céréale dans l'étape d) et/ou e) et/ou le mélange de la paille de céréale selon l'étape f) avec au moins un agent ignifuge et/ou au moins un agent d'hydrophobisation et/ou au moins un biocide, et/ou
g2) le cas échéant le mélange de la paille de céréale conditionnée selon l'étape f) avec l'au moins une fibre de liaison,
h) la fabrication d'une première couche de matériau à partir de la paille de céréale conditionnée selon l'étape f), g1) et/ou g2) dans un dispositif d'alimentation,
i) le mélange de la paille de céréale conditionnée selon l'étape h) avec l'au moins une fibre de liaison et le cas échéant avec le matériau de plante de liber broyé contenant des fibres végétales et le cas échéant des chènevottes, dans la mesure où le mélange avec l'au moins une fibre de liaison selon l'étape g2) n'a pas déjà eu lieu, ou
le mélange de la paille de céréale conditionnée selon h) avec l'au moins une fibre de liaison et le cas échéant avec le matériau de plante de liber broyé contenant des fibres végétales et le cas échéant des chènevottes en plus du mélange avec l'au moins une fibre de liaison selon l'étape g2),
j) le cas échéant le stockage intermédiaire du mélange obtenu selon l'étape h) ou i),
k) le déchargement du mélange selon i) ou j) sur un convoyeur avec formation d'un voile de fibres,
l) le cas échéant le traitement du voile de fibres avec au moins un agent ignifuge et/ou au moins un agent d'hydrophobisation et/ou au moins un biocide, en particulier le chargement du voile de fibres depuis le côté supérieur et/ou depuis le côté inférieur, en particulier le côté supérieur, avec un système aqueux, contenant au moins un agent ignifuge et/ou au moins un agent d'hydrophobisation et/ou au moins un biocide
m) la formation d'un pré-non-tissé ou d'un non-tissé au moyen d'au moins un premier formateur de non-tissé, en particulier équipé d'aiguilles ou de picots ou équipé d'au moins un fil en dents de scie, et/ou au moyen d'au moins un distributeur de non-tissé, en particulier comprenant ou constitué d'au moins un rouleau à picots
n) le cas échéant le traitement du pré-non-tissé ou du non-tissé avec au moins un agent ignifuge et/ou au moins un agent d'hydrophobisation et/ou au moins un biocide, en particulier le chargement du pré-non-tissé ou du non-tissé depuis le côté supérieur et/ou depuis le côté inférieur, en particulier le côté supérieur, avec un système aqueux, contenant au moins un agent ignifuge et/ou au moins un agent d'hydrophobisation et/ou au moins un biocide
o) le cas échéant, le chargement du pré-non-tissé ou du non-tissé, en particulier la dispersion du pré-non-tissé ou du non-tissé, avec l'au moins une fibre de liaison,
p) le cas échéant, la formation d'un non-tissé à partir du pré-non-tissé selon l'étape m), n) ou o) au moyen d'un deuxième formateur de non-tissé, en particulier aérodynamique, contenant en particulier un tambour, en particulier équipé d'un fil en dents de scie et/ou de rouleaux à picots, le pré-non-tissé étant amené de préférence au formateur de non-tissé au moyen d'une deuxième unité de transport, contenant au moins une paire de rouleaux constituée de rouleaux supérieur et inférieur ou contenant un rouleau supérieur et une table d'alimentation,
q) le cas échéant, le traitement de ce non-tissé avec au moins un agent ignifuge et/ou au moins un agent d'hydrophobisation et/ou au moins un biocide, en particulier le chargement du non-tissé depuis le côté supérieur et/ou depuis le côté inférieur, en particulier le côté supérieur, avec un système aqueux, contenant au moins un agent ignifuge et/ou au moins un agent d'hydrophobisation et/ou au moins un biocide,
s) l'activation de la fibre de liaison, comprenant le traitement du non-tissé obtenu selon l'une quelconque des étapes m) à q) avec de la chaleur et/ou le chargement simultané ou décalé dans le temps du non-tissé avec de la pression et/ou de la vapeur d'eau,
t) le cas échéant, le calandrage du mélange obtenu selon l'étape s),
u) dans la mesure où un traitement thermique a eu lieu dans l'étape s) et/ou t), le refroidissement du mélange solidifié selon l'étape s) et/ou t) et le cas échéant le chargement avec de la pression et
v) la séparation du mélange solidifié en matériaux fibreux, en particulier en mats isolants ou en panneaux isolants,
la proportion de la paille de céréale étant égale ou supérieure à 90 % en poids, la proportion en poids mentionnée de la paille de céréale étant calculée sur la base du poids total de la paille de céréale et du matériau de plante de liber broyé, et
la proportion de la fibre de liaison étant dans la plage de 10 à 15 % en poids, par rapport au poids total du matériau fibreux fabriqué.

2. Procédé selon la revendication 1, **caractérisé en ce que**
la paille de céréale en a) est de la paille de céréale séchée,
le matériau de plante de liber broyé est du matériau de plante de liber séché,
les fibres de plante de liber et les chènevottes en c) sont au moins partiellement liées les unes aux autres,
la paille de céréale conditionnée selon l'étape f), g1) et/ou h) en i) est mélangée dans le flux d'air avec l'au moins une fibre de liaison et le cas échéant avec le matériau de plante de liber broyé contenant des fibres végétales et le cas échéant des chènevottes,
l'au moins un premier formateur de non-tissé est un formateur de non-tissé aérodynamique, contenant en particulier au moins un rouleau à aiguilles ou un tambour, et/ou
le mélange déchargé sous la forme d'un voile de fibres est amené au formateur de non-tissé ou au distributeur de non-tissé au moyen d'une première unité de transport.

3. Procédé selon la revendication 2, **caractérisé en ce que**
la première unité de transport contient au moins une paire de rouleaux constituée de rouleaux supérieur et inférieur ou un rouleau supérieur et une table d'alimentation, en particulier une table à auges.

4. Procédé selon l'une quelconque des revendications précédentes, **caractérisé en ce que**
la paille de céréale présente après l'étape f) une humidité résiduelle dans la plage de 10 à 15 % en poids.

5. Procédé selon l'une quelconque des revendications précédentes, **caractérisé en ce que**
le agrégat de mouture, en particulier le raffineur, présente un rotor et un stator, la distance entre le rotor et le stator dans l'étape e) étant dans la plage de 0,05 mm à 3,5 mm et de préférence dans la plage de 0,1 mm à 2,0 mm.

6. Procédé selon l'une quelconque des revendications précédentes, **caractérisé en ce que**
la paille de céréale pré-broyée présente une longueur moyenne ou absolue dans la plage de 0,1 cm à 25 cm, de préférence dans la plage de 0,3 cm à 15 cm et de manière particulièrement préférée dans la plage de 0,5 cm à 12 cm, et/ou **en ce que** la paille de céréale broyée présente après l'étape f) une longueur moyenne ou absolue dans la plage de 1 mm à 70 mm et de manière particulièrement préférée dans la plage de 3 mm à 50 mm.

7. Procédé selon l'une quelconque des revendications précédentes, **caractérisé en ce que**
dans l'étape s), l'activation des fibres de liaison comprend le traitement du non-tissé obtenu selon au moins l'une des étapes n) à q) avec de la chaleur et/ou le chargement simultané ou décalé dans le temps du non-tissé avec de la pression et/ou de la vapeur d'eau.

8. Procédé selon l'une quelconque des revendications précédentes, **caractérisé en ce que**
la proportion du matériau de plante de liber broyé est dans la plage de 4 à 10 % en poids, par rapport au poids total du matériau fibreux fabriqué.

9. Procédé selon l'une quelconque des revendications précédentes, **caractérisé en ce que**
les fibres de liaison sont des fibres monocomposantes ou multicomposantes thermoplastiques, en particulier des fibres bicomposantes.
